# EUROPEAN PATENT APPLICATION

(11) **EP 4 629 471 A1**
(43) Date of publication of application: **08.10.2025**
(21) Application number: 22967112.8
(22) Date of filing: 29.11.2022
(51) Int. Cl.: H02J 7/00, H01M 10/44, H02J 7/02

(54) **POWER STORAGE DEVICE, AND POWER CONVERSION DEVICE COMPRISING POWER STORAGE DEVICE**

(71) Applicant: MITSUBISHI ELECTRIC CORPORATION, Chiyoda-ku Tokyo 100-8310 (JP)
(72) Inventor: TABUCHI, Akiko, Tokyo 100-8310 (JP); HARA, Satoshi, Tokyo 100-8310 (JP); SHIMOKASA, Ryohei, Tokyo 100-8310 (JP); HORINOUCHI, Katsuhiko, Tokyo 100-8310 (JP)
(74) Representative: Hoffmann Eitle
(86) International application number: PCT/JP2022/043954
(87) International publication number: WO 2024/116277

(57) **Abstract**

A power storage device (10) includes m strings (31_1 to 31_m) connected in parallel to each other. Each of the m strings includes n units (32_1 to 32_n) connected in series to each other. Each of the n units includes: a positive-side node (P2) and a negative-side node (N2); a plurality of power storage elements (SE); and a switching circuit (SW) capable of switching a state of each unit to a first state and a second state, the first state being a state in which the plurality of power storage elements (SE) are connected between the positive-side node and the negative-side node, the second state being a state in which the positive-side node and the negative-side node are connected without having the plurality of power storage elements (SE) interposed therebetween. When one or more control units (36, 37) determine that a first unit in a first string has a failure, the one or more control units (36, 37) control the switching circuit (SW) to switch the first unit to the second state and switch a second unit in each string other than the first string to the second state.

## Description

### TECHNICAL FIELD

The present disclosure relates to a power storage device and a power conversion device including the power storage device.

### BACKGROUND ART

A power storage device includes multiple power storage elements connected in series and in parallel. When charging and discharging of one power storage element stop during charging and discharging of the power storage device, stop of charging and discharging of the power storage device is generally required, which leads to a decrease in operation efficiency of the power storage device.

Japanese Patent Laying-Open No. 2020-22342 (PTL 1) discloses a power storage device in which power feeding to a load does not stop even when discharging of one power storage element stops during discharging. Specifically, the power storage device in this literature has a battery circuit group including a plurality of battery circuits connected in parallel, and each of the battery circuits includes a plurality of battery units connected in series to each other, and a diode connected in series to the plurality of battery units such that a discharging direction of batteries is a forward direction. Each of the plurality of battery units and the diode is provided with a bypass switch. According to this configuration, even when one battery unit is separated by the bypass switch during discharging, power feeding to the load does not stop.

### CITATION LIST

### PATENT LITERATURE

PTL 1: Japanese Patent Laying-Open No. 2020-22342

### SUMMARY OF INVENTION

### TECHNICAL PROBLEM

In the power storage device disclosed in Japanese Patent Laying-Open No. 2020-22342 (PTL 1) above, only the bypass switch connected in parallel to the diode of one of the plurality of battery circuits is turned on during charging such that the plurality of battery circuits are charged one-by-one. Therefore, the above-described power storage device has a disadvantage of being unable to charge the plurality of battery circuits simultaneously.

The present disclosure has been made in view of the above-described problem, and an object thereof is to provide a power storage device including a plurality of power storage units connected in series and in parallel, in which charging and discharging of the power storage device can be continued even when charging and discharging of one power storage unit become impossible during charging and during discharging of the power storage device.

### SOLUTION TO PROBLEM

A power storage device according to an embodiment includes m strings connected in parallel to each other between a positive electrode and a negative electrode. The m is an integer equal to or larger than 2. Each of the m strings includes n units connected in series to each other between the positive electrode and the negative electrode. The n is an integer equal to or larger than 2. Each of the n units includes: a positive-side node and a negative-side node for connecting to an adjacent unit; a plurality of power storage elements; and a switching circuit capable of switching a state of each unit to a first state and a second state, the first state being a state in which the plurality of power storage elements are connected between the positive-side node and the negative-side node, the second state being a state in which the positive-side node and the negative-side node are connected without having the plurality of power storage elements interposed therebetween. The power storage device further includes one or more control units that control the switching circuit. When the one or more control units determine that a first unit, which is one of the n units, in a first string, which is one of the m strings, has a failure, the one or more control units control the switching circuit to switch a state of the first unit in the first string from the first state to the second state and switch a state of a second unit, which is one of the n units, in each string other than the first string from the first state to the second state, whereby the same number of units are switched to the second state in the first string and in each string other than the first string.

### ADVANTAGEOUS EFFECTS OF INVENTION

According to the above-described embodiment, it is possible to provide a power storage device in which the failed first unit in the first string and the second unit in each string other than the first string are switched to the second state, which is a bypass state, whereby charging and discharging of the power storage device can be continued even when charging and discharging of one power storage unit become impossible.

### BRIEF DESCRIPTION OF DRAWINGS

Fig. 1 is a diagram showing a configuration of a power conversion device according to the present disclosure.
Fig. 2 is a diagram showing a configuration of a power storage device according to the present disclosure.
Fig. 3 is a diagram showing a configuration of a unit in Fig. 2.
Fig. 4 is a diagram showing an example of a relationship between an SOC and an OCV.
Fig. 5 shows an example of an equivalent circuit diagram of a battery cell.
Fig. 6 is a flowchart illustrating a process by which a management device of the unit detects a failure in the unit.
Fig. 7 is a flowchart showing an operation continuation process performed by a management device of the power storage device when the management device of the power storage device has received a failure signal from the management device of the unit.
Fig. 8 is a diagram showing a configuration of a unit in a power storage device according to a second embodiment.
Fig. 9 is a configuration diagram of a current-limiting switch in Fig. 8.
Fig. 10 is a flowchart illustrating a process by which a management device of the unit detects a failure in the unit in the power storage device according to the second embodiment.
Fig. 11 is a flowchart showing a procedure of an operation continuation process performed by a management device of the power storage device when the management device of the power storage device has received a heavy failure signal and a light failure signal from the management device of the unit in the power storage device according to the second embodiment.
Fig. 12 is a flowchart showing a procedure of an operation continuation process performed by a management device of a power storage device when the management device of the power storage device has received a heavy failure signal from a management device of a unit in a power storage device according to a third embodiment.
Fig. 13 is a flowchart showing a procedure of an operation continuation process performed by the management device of the power storage device when the management device of the power storage device has received a light failure signal from the management device of the unit and when the power storage device is not in a non-operating state in the power storage device according to the third embodiment.
Fig. 14 is a flowchart showing a procedure of replacing a unit to be switched to a bypass state.
Fig. 15 is a diagram showing a configuration of a power storage device according to a fifth embodiment.
Fig. 16 is a flowchart showing a procedure of emergency discharging in the power storage device in Fig. 15.
Fig. 17 is a diagram showing a configuration of a power storage device according to a sixth embodiment.
Fig. 18 is a diagram showing a configuration of a unit in a power storage device according to a seventh embodiment.

### DESCRIPTION OF EMBODIMENTS

Hereinafter, embodiments will be described in detail with reference to the drawings. The same or corresponding portions are denoted by the same reference characters and description thereof will not be repeated.

### First Embodiment.

### [Configuration of Power Conversion Device 100]

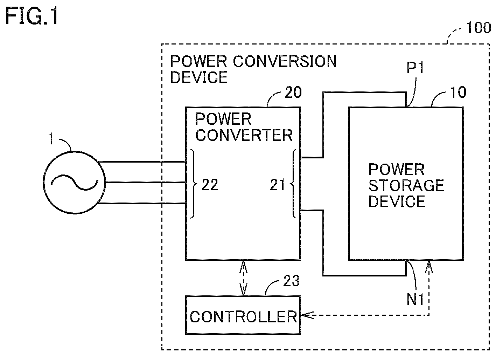

Fig. 1 is a diagram showing a configuration of a power conversion device 100 according to the present disclosure. Power conversion device 100 includes a power storage device 10, a power converter 20, and a controller 23 that controls power converter 20. Power conversion device 100 is connected to a power system 1 and operates such that active power is received and transmitted between power system 1 and power storage device 10. Power conversion device 100 may have the function of supplying reactive power to the power system.

Power converter 20 has a DC end 21 connected to power storage device 10, and an AC end 22 connected to power system 1. Power converter 20 may be, for example, a modular multi-level converter in which a plurality of unit converters are cascade-connected.

A circuit configuration of power converter 20 is not limited to the configuration shown in Fig. 1. Although two DC ends are connected to a positive electrode P1 and a negative electrode N1 of power storage device 10, respectively, in Fig. 1, for example, three or more terminals of the DC end may be connected to three or more terminals of power storage device 10, respectively. Alternatively, power converter 20 may be divided into a DC-DC converter and a DC-AC converter. Alternatively, a transformer configured to boost a voltage level of the AC end to a voltage level of power system 1 may be provided between AC end 22 and power system 1.

Controller 23 generates command values for controlling power converter 20 and power storage device 10 based on information about power storage device 10 received from a management device 36 of power storage device 10, information about power system 1, and the like.

### [Configuration of Power Storage Device 10]

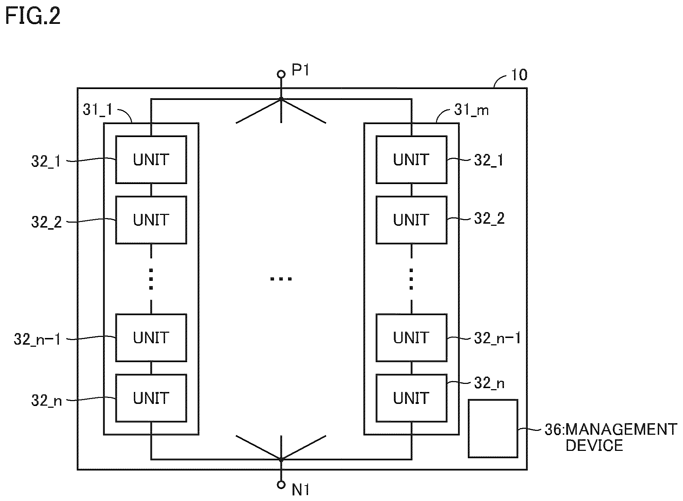

Fig. 2 is a diagram showing a configuration of power storage device 10 according to the present disclosure. As shown in Fig. 2, power storage device 10 includes m strings 31_1 to 31_m connected in parallel to each other between positive electrode P1 and negative electrode N1, and management device 36 that manages power storage device 10. Each of strings 31_1 to 31_m includes n units 32_1 to 32_n connected in series to each other.

In the following description, when strings 31_1 to 3 1_m and units 32_1 to 32_n are collectively referred to or any one of them is referred to, strings 31_1 to 3 1_m and units 32_1 to 32_n are denoted as string 31 and unit 32.

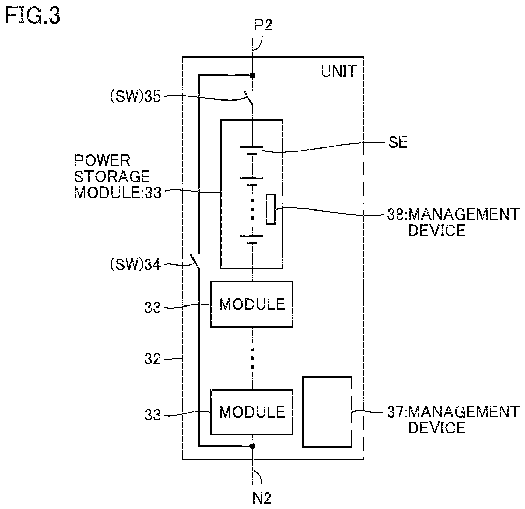

Fig. 3 is a diagram showing a configuration of unit 32 in Fig. 2. As shown in Fig. 3, unit 32 includes a plurality of power storage modules 33 connected in series to each other between a positive-side node P2 and a negative-side node N2, a switch 35 connected in series to the plurality of power storage modules 33 between positive-side node P2 and negative-side node N2, a switch 34 connected in parallel to the whole of the plurality of power storage modules 33 and switch 35, and a management device 37 that manages unit 32.

Typically, positive-side node P2 is connected to negative-side node N2 of adjacent unit 32, and negative-side node N2 is connected to positive-side node P2 of adjacent unit 32. Positive-side node P2 of unit 32 located closest to positive electrode P1 is connected to positive electrode P1 of power storage device 10, and negative-side node N2 of unit 32 located closest to negative electrode N1 is connected to negative electrode N1 of power storage device 10.

Each of power storage modules 33 includes a plurality of power storage elements SE, and a management device 38 that manages power storage module 33. The plurality of power storage elements SE may be connected in series to each other as shown in Fig. 3, or may be connected in parallel to each other unlike Fig. 3, or may be connected in series and in parallel. A form of connection of power storage elements SE is not particularly limited. In the following description, power storage module 33 may be simply denoted as module 33.

Management device 38 of power storage module 33 includes a voltage detector, a temperature measuring device, a current detector, and a state-of-charge (SOC) computing device that are related to power storage elements SE and power storage modules 33, the function of sensing an abnormality of power storage elements SE based on measurement values and computation results thereof, a balance circuit that suppresses a voltage variation among power storage elements SE, the function of communicating with management device 37 of unit 32, and the like.

Although management devices 36, 37 and 38 are provided in a hierarchical manner in the present disclosure, the present disclosure does not necessarily need to have such a configuration. For example, only one control unit for controlling power storage device 10, units 32 and power storage modules 33 may be provided in power storage device 10. Thus, in the present disclosure, when management devices 36, 37 and 38 are collectively referred to, management devices 36, 37 and 38 are referred to as "one or more control units".

Each of power storage elements SE is not particularly limited as long as power storage element SE can store energy and electrically input and output the stored energy, such as a storage battery cell or an electric double layer capacitor. Power storage elements SE in unit 32 are of the same type and are managed such that SOCs thereof become equal to each other regardless of a variation in properties. A case in which power storage element SE is a lithium ion battery (LIB) cell will be described below as an example.

**In** addition, the units are configured such that full charge capacities and open circuit voltages (OCVs) at the time of full charge of the units become equal to each other. Thus, the voltages of the units become equal to each other in an intermediate state of charging of power storage device 10 or in an intermediate state of discharging of power storage device 10. The configuration of the units as described above may be implemented, for example, by connecting the same number of power storage elements SE, which are equal to each other in the full charge capacity and the open circuit voltage at the time of full charge, in the same form of connection for each unit.

Regarding switches 34 and 35, in a normal state, switch 35 is closed and switch 34 is open. When switch 35 is closed, a current can flow through each of power storage modules 33 of unit 32. When switch 35 is open, the current does not flow through unit 32 (and further, string 31 to which unit 32 belongs). By closing switch 34, the current can bypass switch 35 and the plurality of power storage modules 33 and flow through adjacent unit 32.

Switch 35 may be any of a component such as an electromagnetic contactor that can be opened and closed in response to an external signal, a component such as a no-fuse circuit breaker that can be opened and closed by manual operation and can be only opened in response to an external signal, a semiconductor switch, a semiconductor current limiter, a disconnector and the like, and is selected in accordance with the function required as a system. Alternatively, switch 35 may be implemented by a combination of two or more of the above-described components. A bypass switch enabling high-speed switching-on and having a current cutoff capability is used as switch 34. Furthermore, a fuse may be provided in series with power storage modules 33 and switch 35 to cut off a short-circuit current.

Instead of switches 34 and 35 that are on/off switches, a changeover switch may be used to switch the path of the current. Therefore, more generally, unit 32 is provided with a switching circuit SW, and switching circuit SW can switch unit 32 to any one of a chargeable and dischargeable state in which the plurality of power storage modules 33 are connected between positive-side node P2 and negative-side node N2, a disconnected state between positive-side node P2 and negative-side node N2, and a bypass state in which positive-side node P2 and negative-side node N2 are connected through a bypass path without having power storage modules 33 interposed therebetween. **In** the present disclosure, the chargeable and dischargeable state may be referred to as a first state, the bypass state may be referred to as a second state, and the disconnected state may be referred to as a third state.

Management device 37 of unit 32 has the function of communicating with management device 38 of each power storage module 33, and collects states of power storage elements SE from management device 38 of each power storage module 33. Furthermore, when a voltage, a current, a temperature and the like are detected in unit 32 itself, management device 37 monitors detection values thereof and operates switches 34 and 35. Furthermore, management device 37 of unit 32 has the function of communicating with management device 36 of power storage device 10, and receives a command to operate switches 34 and 35 from management device 36 of power storage device 10, warns management device 36 of power storage device 10 about an abnormality of unit 32, and transmits the voltage, the temperature, the SOC and the like of unit 32.

Although not shown in Fig. 2, each string 31 may also be provided with a voltage detector, a temperature detector, a current detector and the like, and for each string 31, a switch and/or a fuse may be provided in series with the plurality of units 32. Furthermore, power storage device 10 may also be provided with a voltage detector, a temperature detector, a current detector and the like, and a switch and/or a fuse may further be provided in series with the whole of strings 31_1 to 3 1_m.

In summary, in a normal use state of power storage device 10, the SOCs of all of units 32 are managed to the same level, and switch 34 is open and switch 35 is closed. In this state, n units 32 are connected in series and m units 32 are connected in parallel in power storage device 10.

### [As to SOC of LIB]

It is known that an open circuit voltage (OCV) of an LIB is determined depending on an SOC. The open circuit voltage is also referred to as a no-load voltage.

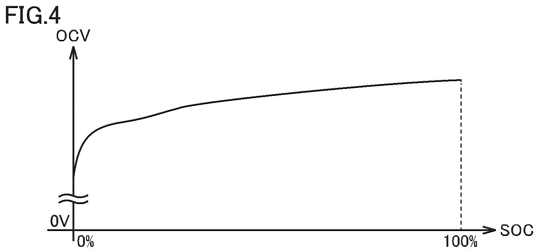

Fig. 4 is a diagram showing an example of a relationship between the SOC and the OCV. As shown in Fig. 4, as the SOC increases from 0% (completely discharged) to 100% (completely charged), the OCV also increases, although it is nonlinear. Generally, in a storage battery cell, when charging and discharging stop, a terminal voltage changes for a while. A voltage when the stopped state continues and the change in the terminal voltage ends corresponds to the OCV. There are a plurality of time constants of the change in the terminal voltage, which range from a long time constant to a short time constant. The time constant varies depending on a type, a temperature, an SOC and the like of a battery, and the magnitude of the time constant is, for example, approximately 100 seconds. Therefore, 1000 seconds or longer are required until the terminal voltage of the storage battery cell becomes stable.

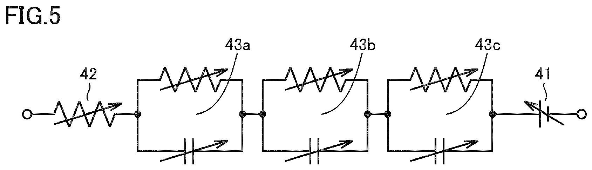

Fig. 5 shows an example of an equivalent circuit diagram of a battery cell. As shown in Fig. 5, the battery cell includes a voltage source 41 corresponding to the OCV, a resistance 42 corresponding to a DC resistance component, and parallel circuits 43a to 43c corresponding to the time constant, each parallel circuit including a resistance and a capacitor. These circuit elements vary depending on an SOC, a temperature, a current and the like.

The behavior of the voltage of power storage device 10 will be described using the equivalent circuit in Fig. 5. A voltage of each string in which the charging and discharging stopped state continues for a certain time period or longer is equal to a total of OCVs of the storage battery cells connected in series in the string. In addition, voltages of the strings connected in parallel are equal to each other.

When a current starts to flow through power storage device 10, the terminal voltage of the battery cell rises during charging and falls during discharging due to an influence of resistance 42. In addition, the current flows through parallel circuits 43a to 43c, each including the resistance and the capacitor, and a voltage is gradually applied to the capacitors. This voltage converges to a certain value when the current is constant, increases when the current increases, and decreases when the current decreases. When charging and discharging are stopped, this voltage gradually decreases and returns to zero.

### [As to Use of Power Storage Device 10 When Power Storage Element SE is Failed]

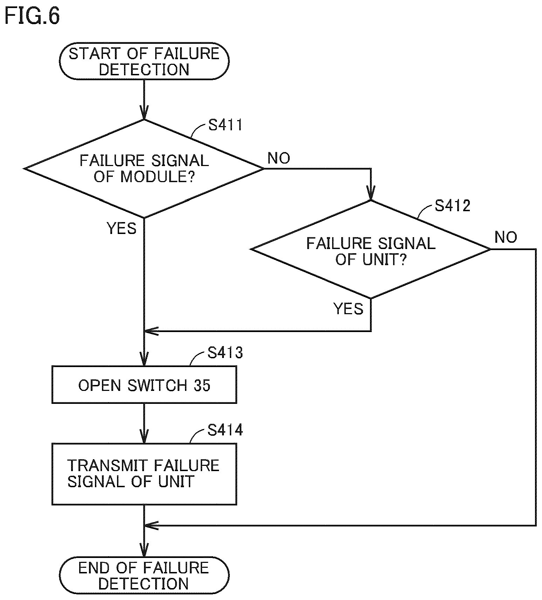

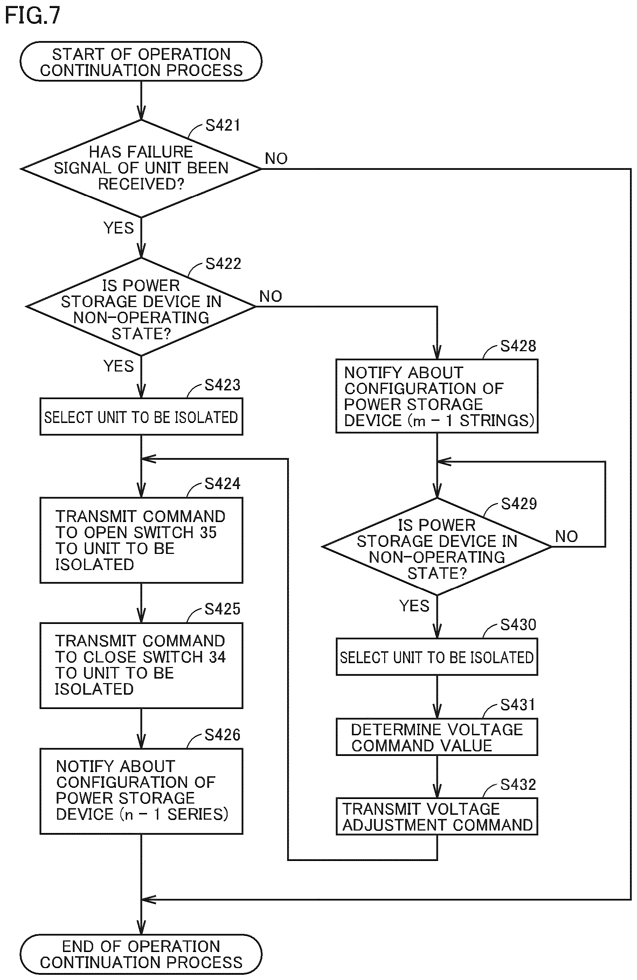

A failure of power storage element SE includes a failure such as an internal short circuit that makes it impossible to continue to use power storage element SE, and a failure that temporarily makes it impossible to use power storage element SE due to deviation of a temperature, a voltage or the like from a management value although power storage element SE can be used again if the deviation is eliminated. **In** a large-capacity power storage system, replacement of a part of components is not easy and replacement is often performed at the time of periodic maintenance and the like. Therefore, in the case of the former failure, it is necessary not to use only a portion including failed power storage element SE and to continue to use the remaining portion. **In** the case of the latter failure as well, once the whole is stopped, a utilization rate decreases, which is problematic. **In** addition, since the number of power storage elements SE and power storage modules 33 is enormous, it is not practical to manage stop of use on a power storage element SE basis or on a power storage module 33 basis. Thus, power storage device 10 according to the first embodiment enables stop of use on a unit 32 basis. A procedure of detecting a failure of power storage element SE in unit 32 will be described below with reference to Fig. 6. A procedure of continuing the operation of power storage device 10 by bypassing the failed unit will be described below with reference to Fig. 7.

### [Process of Detecting Failure in Unit]

Fig. 6 is a flowchart illustrating a process by which management device 37 of unit 32 detects a failure in unit 32. **In** an initial state of each unit 32, switch 35 is in a closed state and switch 34 is in an open state (i.e., the chargeable and dischargeable state).

First, in step S411, management device 37 of unit 32 determines whether management device 37 of unit 32 has received a failure signal indicating a failure of module 33 from management device 38 of each power storage module 33.

When management device 37 of unit 32 has not received the failure signal from power storage module 33 (NO in step S411), management device 37 of unit 32 causes the process to proceed to step S412.

**In** step S412, management device 37 of unit 32 checks the presence or absence of a failure signal of the unit issued by management device 37 of unit 32 itself (step S412). When management device 37 of unit 32 has not issued the failure signal of the unit (NO in step S412), management device 37 of unit 32 determines that there is no failure in the unit, and ends the process.

On the other hand, when management device 37 of unit 32 has received the failure signal from power storage module 33 (YES in step S411) or when management device 37 of unit 32 itself has issued the failure signal (YES in step S412), management device 37 of unit 32 performs a process at the time of detection of the failure.

Specifically, in step S413, management device 37 of unit 32 opens switch 35, thereby switching unit 32 to the disconnected state. In next step S414, management device 37 of unit 32 transmits the failure signal of the unit to management device 36 of power storage device 10.

### [Operation Continuation Process for Power Storage Device 10]

Fig. 7 is a flowchart showing an operation continuation process performed by management device 36 of power storage device 10 when management device 36 of power storage device 10 has received the failure signal from management device 37 of unit 32.

First, management device 36 of power storage device 10 determines whether management device 36 of power storage device 10 has received the failure signal from management device 37 of unit 32. When management device 36 of power storage device 10 has not received the failure signal (NO in step S421), the process ends. In this case, any of units 32 are maintained in the chargeable and dischargeable state.

On the other hand, when management device 36 of power storage device 10 has received the failure signal (YES in step S421), management device 36 of power storage device 10 determines in next step S422 whether power storage device 10 is in a non-operating state. Here, the state in which power storage device 10 is in the non-operating state refers to a state in which a state of no current flowing between DC end 21 of power converter 20 and power storage device 10 continues for a certain time period or longer. When power converter 20 is in operation and active power and reactive power are received and transmitted between AC end 22 of power converter 20 and power system 1, the current flows between DC end 21 of power converter 20 and power storage device 10, and thus, power storage device 10 is not in the non-operating state. On the other hand, when only the reactive power is received and transmitted between AC end 22 of power converter 20 and power system 1, even when power converter 20 is in operation, power storage device 10 is in the non-operating state if the state of no current flowing between DC end 21 of power converter 20 and power storage device 10 continues for the certain time period. When a high frequency component flows, even when the active power is not received and transmitted between DC end 21 of power converter 20 and power storage device 10, power storage device 10 is not in the non-operating state.

When the power storage device is in the non-operating state (YES in step S422), management device 36 of power storage device 10 causes the process to proceed to S423. In step S423, management device 36 of power storage device 10 selects, for each string 31, unit 32 to be isolated from the string 31. Here, isolating unit 32 refers to opening switch 35 and closing switch 34, thereby passing the current so as to bypass this unit 32 (i.e., switching unit 32 to the bypass state).

Specifically, in string 31 including failed unit 32, failed unit 32 is selected. In each of the other strings 31 as well, a unit to be isolated from the string 31 is selected such that the number of series units matches the number of series units after isolation of the failed unit in the string including the failed unit. Unit 32 to be isolated may be a unit located at the same position as that of the failed unit, or may be selected based on a use history such as a usage rate or a degree of battery deterioration.

In next step S424, management device 36 of power storage device 10 transmits a command to open switch 35 to management device 37 of unit 32 to be isolated for each string 31. Since switch 35 of failed unit 32 has already been opened (step S413 in Fig. 6), the open command does not need to be transmitted.

In next step S425, management device 36 of power storage device 10 transmits a command to close switch 34 to management devices 37 of units 32 selected in step S423 (i.e., all of the units to be isolated from the respective strings also including the failed unit). Management devices 37 of units 32 that have received the close command operate switches 34 to the closed state, whereby the units to be isolated from the respective strings are bypassed. At this point in time, charging and discharging of power storage device 10 can be performed again in a state where the number of series units in each string 31 has decreased by one.

In next step S426, management device 36 of power storage device 10 notifies controller 23 controlling the operation of power conversion device 100 that the configuration of power storage device 10 has changed (i.e., the number of series units 32 has decreased by one). When the non-operating period of power storage device 10 ends, controller 23 generates a command value in accordance with the number of series units 32 at the present time in each string 31, thereby controlling power converter 20.

As a specific example, in power storage device 10 configured as shown in Fig. 2, in a case where first unit 32_1 in string 31_1 fails, first units 32_1 in strings 31_1 to 3 1_m are isolated from the respective strings when power storage device 10 is in the non-operating state. Thereafter, when the non-operating period of power storage device 10 ends, power conversion device 100 can continue the operation in a state where the number of series units 32 in each string 31 is n - 1.

Returning to S422 in Fig. 7, a case in which power storage device 10 is not in the non-operating state (NO in S422) will be described. In this case, the current is flowing between power storage device 10 and DC end 21 of power converter 20, the operation of opening and closing switches 34 and 35 of unit 32 cannot be performed.

In next step S428, management device 36 of power storage device 10 notifies controller 23 of power conversion device 100 that the number of strings in power storage device 10 has changed from m to m - 1.

At the time of reception of the failure signal from management device 37 of unit 32 in step S421, switch 35 of failed unit 32 has already moved to the open state (step S413 in Fig. 6). Therefore, charging and discharging of string 31 including failed unit 32 are in the stopped state, and thus, the number of strings involved in charging and discharging is m - 1 that is smaller by one than the number of strings before the failure. The current flowing through string 31 in the charging and discharging stopped state before the failure is superimposed on remaining strings 31. As a result, a load current of remaining strings 31 increases. However, when the number of parallel strings 31 is large, controller 23 of power conversion device 100 generates a command value for controlling power converter 20 in accordance with the number of parallel strings 31 at the present time, whereby the operation can be continued for a while.

**In** next step S429, management device 36 of power storage device 10 awaits until power storage device 10 enters the non-operating period. When power storage device 10 enters the non-operating period (YES in step S429), failed unit 32 is isolated, whereby the configuration is changed to the configuration of operating using all of the strings, similarly to the case of YES in step S422.

Specifically, first, in step S430, management device 36 of power storage device 10 selects unit 32 to be isolated for each string 31. Since the operation in step S430 is the same as the operation in step S423, description will not be repeated.

**In** next step S431, management device 36 of power storage device 10 determines a voltage command value of string 31. The reason for this is as follows. **In** power storage modules 33 in strings 31 that do not include failed unit 32, charging and discharging continue before power storage device 10 enters the non-operating period, and thus, the SOCs thereof may be significantly different from the SOC of power storage module 33 in the string including failed unit 32. As a result, the OCVs and the terminal voltages of strings 31 that do not include failed unit 32 are different from the OCV and the terminal voltage of string 31 including failed unit 32. Since strings 31 different in terminal voltage as described above cannot be directly connected in parallel, it is necessary to match the voltages of the strings before connecting the strings in parallel. **In** string 31 including failed unit 32, charging and discharging are stopped, and thus, the terminal voltage is considered to be close to the OCV.

As the technical term used in the present disclosure, "unit voltage" will now be defined. "Unit voltage" refers to a voltage between positive-side node P2 and negative-side node N2 when unit 32 is in the chargeable and dischargeable state (i.e., switch 35 is in the closed state and switch 34 is in the open state). Therefore, "unit voltage" is a sum of the terminal voltages of power storage modules 33. It should be noted that the voltage of unit 32 itself between positive-side node P2 and negative-side node N2 takes a value different from the unit voltage when unit 32 is in the disconnected state and the bypass state.

When the above-described term "unit voltage" is used, the voltage command value of string 31 to be determined in step S431 is equal to a value obtained by multiplying the "unit voltage" of each non-failed unit 32 in string 31 including the failed unit by the number n of series units 32.

In next step S432, management device 36 of power storage device 10 transmits a voltage adjustment command to controller 23 of power conversion device 100 such that the voltage at DC end 21 of power converter 20 (i.e., voltages of the other strings 31 other than the string including the failed unit) becomes equal to the voltage command value of the string. In response to this voltage adjustment command, controller 23 operates power converter 20, thereby charging or discharging the other strings 31 to adjust the voltage.

For the voltage adjustment, controller 23 performs constant current and constant voltage control over power converter 20, for example. At this time, the active power is received and transmitted between AC end 22 of power converter 20 and power system 1, and thus, charging or discharging of strings 31 is performed with a smaller current such that power system 1 is not greatly affected.

When the voltage adjustment in step S432 is completed, the processing in steps S424, S425 and S426 is performed. Since the processing in these steps is the same as the processing in the already-described case of YES in step S422, description will not be repeated. The units isolated from the respective strings in the processing in these steps are the units selected in step S430.

A specific example is as follows. In power storage device 10 configured as shown in Fig. 2, it is assumed that first unit 32_1 in string 31_1 is failed. In this case, switch 35 of failed unit 32 is opened, whereby string 31_1 is temporarily disconnected and the operation is continued using the m - 1 parallel strings formed by remaining strings 31_2 to 31_m and n series units 32 for each string. Thereafter, when power storage device 10 enters the non-operating period, first unit 32_1 in each of strings 31_1 to 31_m is isolated from the string. When the non-operating period ends, the operation is continued using m parallel strings 31 each including n - 1 series units 32.

In steps S431 and S432 in Fig. 7, the voltages of strings 31 that do not include the failed unit are adjusted. In contrast, however, the voltage of string 31 including the failed unit can also be adjusted. In this case, switches 35 of units 32 to be isolated in strings 31 that do not include failed unit 32 are opened, whereby these strings are temporarily isolated from power storage device 10, and then, switch 34 of failed unit 32 is closed and failed unit 32 is bypassed. As a result, the voltage of the string including failed unit 32 can be adjusted to be equal to the voltages of strings 31 that do not include failed unit 32.

### [Effect of First Embodiment]

As described above, in power storage device 10 according to the first embodiment, switching circuit SW (switches 34 and 35) provided for each unit 32 can switch each unit 32 to any one of the chargeable and dischargeable state (switch 34: open, switch 35: closed) in which positive-side node P2 and negative-side node N2 are connected with the plurality of power storage elements SE interposed therebetween, the disconnected state (switch 34: open, switch 35: open), and the bypass state (switch 34: closed, switch 35: open) in which positive-side node P2 and negative-side node N2 are connected through the bypass path without having the plurality of power storage elements SE interposed therebetween. Therefore, there is no need to stop the whole of power storage device 10 when power storage element SE fails or when temporary stop of charging and discharging is required only in particular power storage element SE.

In such a case, failed unit 32 or unit 32 that needs to be stopped is switched to the disconnected state, whereby string 31 including this unit 32 can be disconnected and the operation can be continued using remaining strings 31.

Furthermore, in the subsequent non-operating period of power storage device 10, failed unit 32 or unit 32 that needs to be stopped is switched to the bypass state, whereby the number of series units 32 can be reduced such that remaining normal units 32 in this string 31 can be used. Furthermore, in the other strings 31 as well, one or more units 32 are switched to the bypass state so as to match the number of series units 32, whereby charging and discharging of power storage device 10 can be continued using all of strings 31 in a state where the number of series units 32 has decreased.

In addition, in the first embodiment, power conversion device 100 in which above-described power storage device 10 is connected to power system 1 with power converter 20 interposed therebetween is provided. In this power conversion device 100, management device 36 of power storage device 10 is configured to notify controller 23 of power converter 20 that the configuration of power storage device 10 has been changed by isolating a part of strings 31 from power storage device 10 or a part of units 32 from the respective strings. As a result, power converter 20 can operate in accordance with the changed configuration of power storage device 10, which can prevent power storage device 10 from causing excessive deterioration. In addition, when particular string 31 is isolated from and then connected in parallel to the other strings 31 again, charging and discharging of only a part of strings 31 to and from power system 1 through power converter 20 can be performed, and thus, the voltages of strings 31 can be adjusted to match each other.

Power storage device 10 configured as described above has a great advantage particularly when power storage device 10 cannot be easily repaired because of a large-scale system and replacement of failed power storage element SE is difficult. This is because in such a case, only by isolating the minimum number of units 32 from the respective strings, it is possible to continue to use power storage device 10 until repair becomes possible. Furthermore, even when the operation of power storage device 10 cannot be interrupted, the operation can be continuously continued using remaining strings 31 by switching failed unit 32 to the disconnected state and stopping only string 31 including failed unit 32.

### Second Embodiment.

A second embodiment is different from the first embodiment in that the state of unit 32 implemented by switching circuit SW further has a current-limiting state in addition to the chargeable and dischargeable state, the disconnected state and the bypass state. Here, in the current-limiting state, the plurality of power storage elements SE and a current-limiting resistor are connected in series between positive-side node P2 and negative-side node N2 of unit 32. This will be described in detail below with reference to the drawings. **In** the present disclosure, the current-limiting state may be referred to as a fourth state.

### [Configuration of Unit 32 in Power Storage Device 10 According to Second Embodiment]

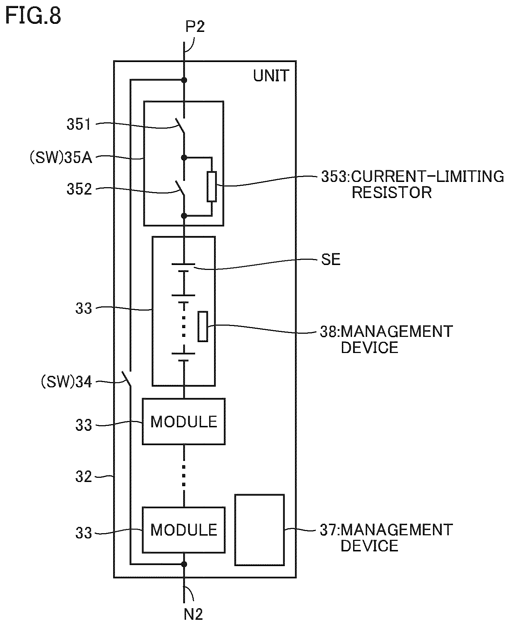

Fig. 8 is a diagram showing a configuration of unit 32 in power storage device 10 according to the second embodiment. Unit 32 in Fig. 8 is different from unit 32 in Fig. 3 in that unit 32 in Fig. 8 includes a switch portion 35A further having not only the opening and closing function but also the current-limiting function, instead of switch 35 in Fig. 3.

Specifically, a switch portion 35A includes a switch 351 and a current-limiting switch 352 connected in series to each other, and a current-limiting resistor 353 connected in parallel to current-limiting switch 352. **In** the chargeable and dischargeable state, switch 351 and current-limiting switch 352 are both in the closed state. **In** the disconnected state and the bypass state, switch 351 is in the open state. **In** this case, current-limiting switch 352 may be in the open state or in the closed state. **In** the current-limiting state in which each power storage element SE is charged and discharged through current-limiting resistor 353, switch 351 is in the closed state and current-limiting switch 352 is in the open state.

An electromagnetic contactor having a current cutoff capability is, for example, used as switch 351, and a semiconductor switch is, for example, used as current-limiting switch 352. Since Fig. 8 is otherwise the same as Fig. 3, the same or corresponding portions are denoted by the same reference characters and description will not be repeated. **In** the following description, when there is no confusion, switch portion 35A is simply denoted as switch 35.

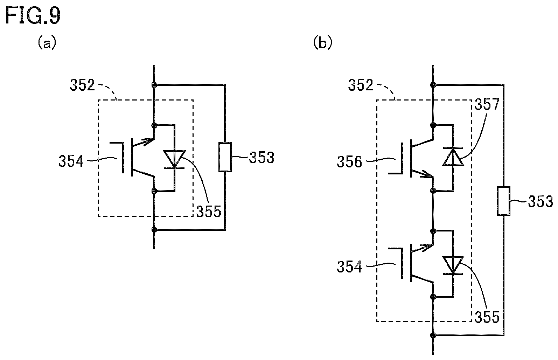

Fig. 9 is a configuration diagram of current-limiting switch 352 in Fig. 8. Fig. 9 also shows current-limiting resistor 353 such that the connection relationship can be easily understood.

In an example shown in Fig. 9(a), current-limiting switch 352 includes an insulated gate bipolar transistor (IGBT) 354, and a diode 355 connected in antiparallel to IGBT 354. IGBT 354 is connected such that an emitter thereof is closer to positive-side node P2 and farther from negative-side node N2 than a collector thereof. Diode 355 is connected such that a direction from the emitter to the collector of IGBT 354 is a forward direction.

In the case of the configuration in Fig. 9(a), in the normal state, IGBT 354 is in an ON state (i.e., current-limiting switch 352 is in the closed state). When IGBT 354 is turned off, a discharge current during discharging passes through current-limiting resistor 353 and is limited. A charge current during charging passes through diode 355 and thus is not limited.

In an example shown in Fig. 9(b), current-limiting switch 352 further includes an IGBT 356 connected in series to IGBT 354, and a diode 357 connected in antiparallel to IGBT 356. An emitter of IGBT 356 is directly connected to the emitter of IGBT 354.

In the case of the configuration in Fig. 9(b), in the normal state, IGBTs 354 and 356 are both in the ON state (i.e., current-limiting switch 352 is in the closed state). When IGBT 354 is turned off and IGBT 356 is turned on, the charge current during charging is not limited although the discharge current during discharging is limited. When IGBT 354 is turned on and IGBT 356 is turned off, the discharge current during discharging is not limited although the charge current during charging is limited. When IGBT 354 and IGBT 356 are both turned off, the discharge current during discharging and the charge current during charging are both limited.

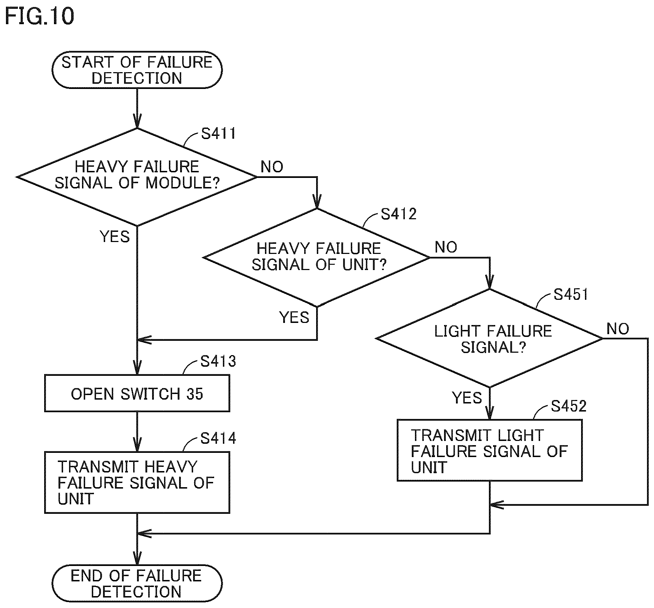

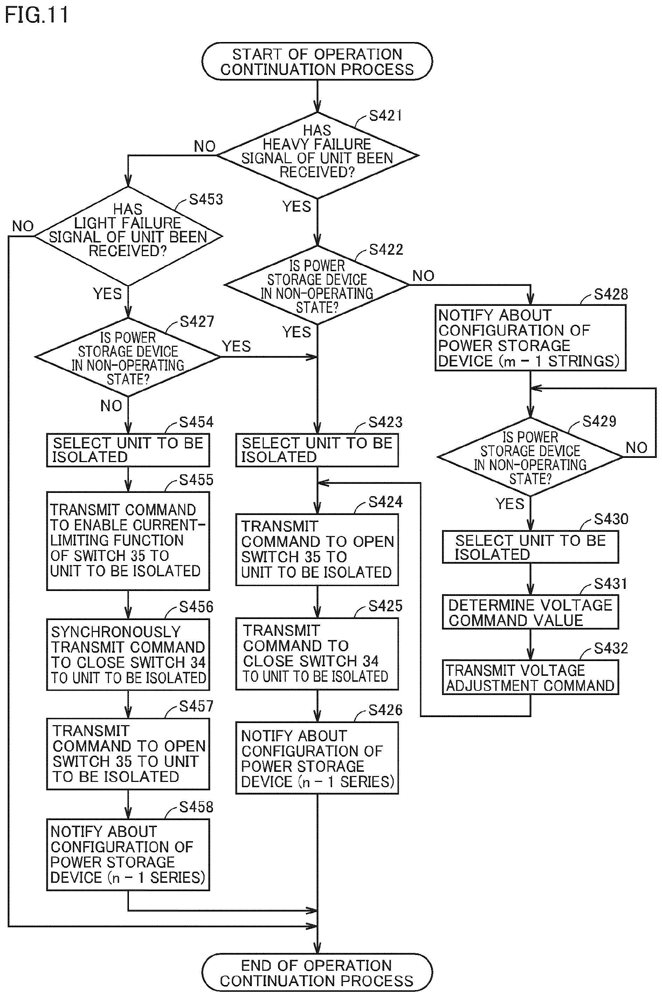

A process of detecting a failure of power storage element SE in unit 32 will be described below with reference to Fig. 10. A process of continuing the operation of power storage device 10 by bypassing or current-limiting a failed unit will be described below with reference to Fig. 11.

### [Process of Detecting Failure in Unit]

Fig. 10 is a flowchart illustrating a process by which management device 37 of unit 32 detects a failure in unit 32 in power storage device 10 according to the second embodiment. The characteristic of the failure detection process in Fig. 10 is that a failure to be detected includes two types of failures, i.e., a heavy failure and a light failure. In the case of the heavy failure, it is necessary to immediately stop charging and discharging of unit 32 and separate failed unit 32, and replacement of unit 32 is required. On the other hand, in the case of the light failure, continuation of charging and discharging must be avoided because the temperature of power storage element SE rises or the voltage of power storage element SE approaches an end of a management range, and replacement of unit 32 is not required.

Since steps S411 and S412 of determining whether a failure is the heavy failure, and steps S413 and S414 performed by management device 37 of unit 32 when the failure is the heavy failure in Fig. 10 are the same as those in Fig. 6, description will not be repeated. The simple expression "failure" in Fig. 6 refers to the heavy failure that requires replacement of unit 32.

When management device 37 of unit 32 has not received a heavy failure signal from power storage module 33 (NO in step S411) and when management device 37 of unit 32 itself has not issued the heavy failure signal (NO in step S412), management device 37 of unit 32 causes the process to proceed to step S451. In step S451, management device 37 of unit 32 determines the presence or absence of a light failure signal. The light failure signal may be received from management device 38 of each power storage module 33, or may be issued by management device 37 itself. As a result, when management device 37 of unit 32 has not received the light failure signal and when management device 37 of unit 32 itself has not issued the light failure signal (NO in S451), management device 37 of unit 32 determines that there is no failure in unit 32, and ends the process.

On the other hand, when management device 37 of unit 32 has received the light failure signal from management device 38 of power storage module 33 or when management device 37 of unit 32 itself has issued the light failure signal (YES in S451), management device 37 of unit 32 causes the process to proceed to step S452. In step S452, management device 37 of unit 32 transmits the light failure signal of the unit to management device 36 of power storage device 10 and ends the failure detection process. In the case of the heavy failure of the unit, switch 35 is immediately brought to the open state, whereby failed unit 32 is switched to the disconnected state (step S413). However, in the case of the light failure of the unit, switch 35 is maintained in the closed state.

### [Operation Continuation Process for Power Storage Device 10]

Fig. 11 is a flowchart showing a procedure of an operation continuation process performed by management device 36 of power storage device 10 when management device 36 of power storage device 10 has received the heavy failure signal and the light failure signal from management device 37 of unit 32 in power storage device 10 according to the second embodiment.

Since steps S421 to S426 and S428 to S432, which are the processing when management device 36 of power storage device 10 has received the heavy failure signal of the unit, are the same as those in Fig. 7, description will not be repeated. However, the expression "failure signal" in Fig. 7 refers to the heavy failure signal.

When management device 36 of power storage device 10 has not received the heavy failure signal from management device 37 of unit 32 (NO in step S421), management device 36 of power storage device 10 determines in next step S453 whether management device 36 of power storage device 10 has received the light failure signal from management device 37 of unit 32. When management device 36 of power storage device 10 has not received the light failure signal from management device 37 of unit 32 (NO in step S453), management device 37 of unit 32 ends the process.

On the other hand, when management device 36 of power storage device 10 has received the light failure signal from management device 37 of unit 32 (YES in step S453), management device 36 of power storage device 10 determines in next step S427 whether power storage device 10 is in the non-operating state. The processing in step S427 is the same as the processing in step S422.

When power storage device 10 is in the non-operating state (YES in step S427), management device 36 of power storage device 10 performs the same processing as that when management device 36 of power storage device 10 has received the heavy failure signal (i.e., steps S423 to S426).

On the other hand, when power storage device 10 is not in the non-operating state (NO in step S427), i.e., when the current is flowing between power storage device 10 and DC end 21 of power converter 20, management device 36 of power storage device 10 selects units 32 to be isolated from the respective strings in next step S454. Since the processing in step S454 is the same as the processing in step S423, detailed description will not be repeated.

In next step S455, management device 36 of power storage device 10 transmits a command to enable the current-limiting function of each of the units to be isolated selected in step S454 to each of the units to be isolated. Management device 37 of each unit 32 that has received the command to enable the current-limiting function operates current-limiting switch 352 to the open state, thereby switching unit 32 of management device 37 itself to the current-limiting state. A configuration of current-limiting switch 352 is a configuration in which the current-limiting function works during at least discharging and is, for example, the configuration described with reference to Figs. 9(a) and 9(b). When the current-limiting function is enabled, the charge and discharge currents flow through current-limiting resistor 353. However, the current between DC end 21 of power converter 20 and power storage device 10 is maintained.

In next step S456, management device 36 of power storage device 10 transmits a command to close switch 34 to each of the units to be isolated. The transmission of the close command to each of the units to be isolated is synchronized, thereby reducing a difference in timing of bypassing the unit to be isolated in each string 31. The transmission of the close command causes each of the units to be isolated to enter a state in which the current-limiting state and the bypass state coexist.

In next step S457, management device 36 of power storage device 10 transmits a command to open switch 35, i.e., switch 351 to each of the units to be isolated. As a result, the charge and discharge currents between DC end 21 of power converter 20 and power storage device 10 flow through switch 34 of each of the isolated units (complete bypass state), and thus, the configuration of power storage device 10 can be changed to a configuration in which m strings are connected in parallel and each string includes n - 1 units connected in series, while continuing the operation.

In next step S458, management device 36 of power storage device 10 notifies controller 23 of power conversion device 100 that the configuration of power storage device 10 has changed. The processing in step S458 is the same as the processing in step S426.

During a time period from when switch 34 is brought to the closed state to when switch 35 is brought to the open state (i.e., the state in which the current-limiting state and the bypass state coexist), current-limiting resistor 353 is connected between positive-side node P2 and negative-side node N2 of each of the units to be isolated, and the discharge current of power storage element SE flows through current-limiting resistor 353. Therefore, a resistance value of current-limiting resistor 353 needs to be determined such that this discharge current falls within an acceptable value. In addition, although a variation is expected to occur in the timing of bypassing the unit to be isolated (i.e., the timing of bringing switch 34 to the closed state), the excessive current does not flow through each string because the discharge current flows through current-limiting resistor 353.

### [Effect of Second Embodiment]

As described above, in power storage device 10 according to the second embodiment, the current-limiting function of connecting current-limiting resistor 353 in series to the plurality of power storage elements SE between positive-side node P2 and negative-side node N2 of each unit 32 is added. Specifically, the current-limiting function can be implemented by operating switch portion 35A. Furthermore, management device 37 of each unit 32 can separately detect the heavy failure and the light failure, and management device 36 of power storage device 10 performs the different processing in accordance with the type of the detected failure. Specifically, when the unit has the light failure, the unit having the light failure can be switched to the bypass state, even if power storage device 10 is not within the non-operating period.

Thus, in the case of the heavy failure in which unit 32 cannot be used again unless power storage element SE is replaced, the operation is continued by stopping charging and discharging of string 31 including the failed unit. On the other hand, in the case of the light failure in which unit 32 can be used again although charging and discharging are temporarily stopped, the failed unit can be bypassed during charging and discharging without stopping charging and discharging of the string.

### Third Embodiment.

Although a configuration of power storage device 10 according to a third embodiment is the same as those of power storage device 10 according to the first embodiment described with reference to Figs. 2 and 3 and power storage device 10 according to the second embodiment described with reference to Fig. 8, power storage device 10 according to the third embodiment is different in usage from power storage device 10 according to the first embodiment and power storage device 10 according to the second embodiment. Therefore, detailed description about the configuration of power storage device 10 will not be repeated.

Specifically, in the first and second embodiments, in the normal state, all of units 32 in each string 31 are set to the chargeable and dischargeable state (i.e., switch 34 is set to the open state and switch 35 is set to the closed state) by operating switching circuit SW. In the third embodiment, each string 31 is used in a state where only one unit 32 is in the bypass state (i.e., switch 34 is in the closed state and switch 35 is in the open state) and remaining n - 1 units 32 are in the chargeable and dischargeable state. In other words, each string 31 is used in a state where the number of series units 32 is n - 1.

In the following description, a unit that has been used in the chargeable and dischargeable state and is determined to be isolated from the corresponding string will be referred to as a unit to be isolated, a unit that has been used in the bypass state and is determined to be used in the chargeable and dischargeable state will be referred to as a unit to be connected, and any other unit that continues to be used in the chargeable and dischargeable state will be referred to as any other unit. Adjustment of the SOC is performed such that all of the units to be connected have the same level of open circuit voltage (OCV) in the bypass state before connection.

### [Operation Continuation Process for Power Storage Device 10 (When Heavy Failure Signal is Received)]

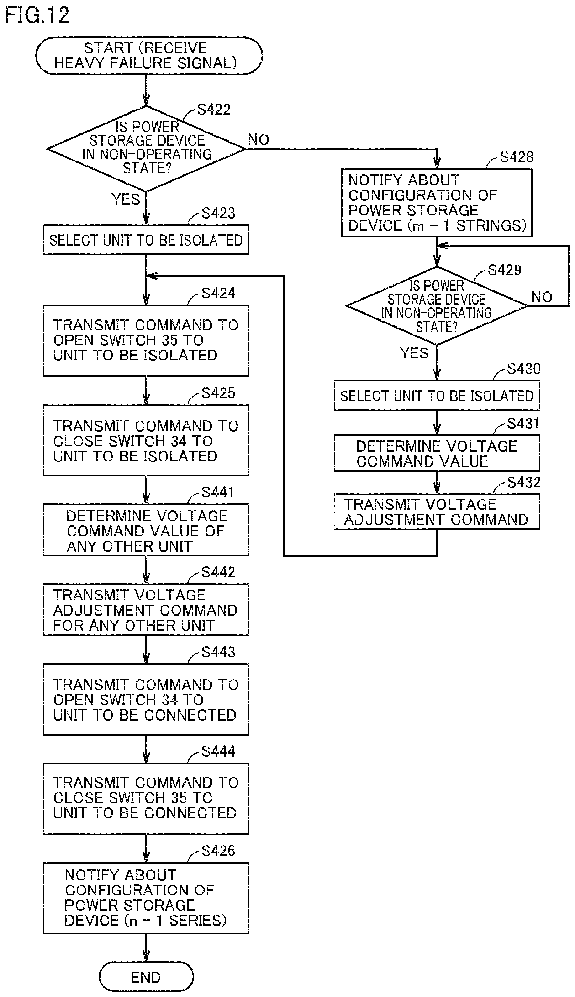

Fig. 12 is a flowchart showing a procedure of an operation continuation process performed by management device 36 of power storage device 10 when management device 36 of power storage device 10 has received the heavy failure signal from management device 37 of unit 32 in power storage device 10 according to the third embodiment. The flowchart in Fig. 12 shows a process procedure in the case of YES in step S421 in the flowcharts shown in Figs. 7 and 11.

Since the procedure until management device 37 of unit 32 transmits the heavy failure signal is the same as those described with reference to Figs. 6 and 10, detailed description will not be repeated.

Referring to Fig. 12, when management device 36 of power storage device 10 has received the heavy failure signal from management device 37 of unit 32, management device 36 of power storage device 10 determines in step S422 whether power storage device 10 is in the non-operating state. Since the procedure in steps S428 to S432, S424 and S425 performed when power storage device 10 is not in the non-operating state (NO in step S422) and the procedure in steps S423 to S425 performed when power storage device 10 is in the non-operating state (YES in step S422) are the same as those in Figs. 7 and 11, description will not be repeated.

At the end of step S425, the unit to be connected and the unit to be isolated in each string 31 are both isolated from the string (bypass state) and each string 31 is operated in a state where the number of series units is n - 2. In this state, there may be a difference between the OCV of any other unit and the OCV of the unit to be connected. In addition, since charging and discharging of the unit to be connected are stopped, the terminal voltage between positive-side node P2 and negative-side node N2 is close to the OCV.

Thus, in next step S441, management device 36 of power storage device 10 determines a voltage command value of any other unit as a unit voltage of the unit to be connected. The voltage command value of the string is obtained by multiplying the voltage command value of any other unit by n - 2.

In next step S442, management device 36 of power storage device 10 transmits a voltage adjustment command to controller 23 of power conversion device 100 such that the voltage at DC end 21 of power converter 20 becomes equal to the voltage command value of string 31. In response to this voltage adjustment command, controller 23 operates power converter 20 (e.g., performs constant current and constant voltage control), thereby charging or discharging any other units to adjust the voltage. At this time, the active power is received and transmitted between AC end 22 of power converter 20 and power system 1, and thus, charging or discharging is performed with a smaller current such that power system 1 is not greatly affected.

When the difference in voltage between any other unit and the unit to be connected decreases, management device 36 of power storage device 10 transmits a command to open switch 34 to management device 37 of the unit to be connected in next step S443. Management device 37 of the unit to be connected that has received the command operates switch 34 to the open state. As a result, the unit to be connected is switched from the bypass state to the disconnected state.

In next step S444, management device 36 of power storage device 10 transmits a command to close switch 35 to management device 37 of the unit to be connected. Management device 37 of the unit to be connected that has received the command operates switch 35 to the open state. As a result, the unit to be connected is switched from the disconnected state to the chargeable and dischargeable state. Thus, charging and discharging of power storage device 10 can be performed again in a state where the number of series units has returned to n - 1.

In next step S426, management device 36 of power storage device 10 notifies controller 23 of power conversion device 100 about the present configuration of power storage device 10, i.e., the number of series units is n - 1 and the number of parallel strings is m. Step S426 is the same as those in Figs. 7 and 11.

### [Operation Continuation Process for Power Storage Device (When Light Failure Signal is Received and Power Storage Device is Not in Non-Operating State)]

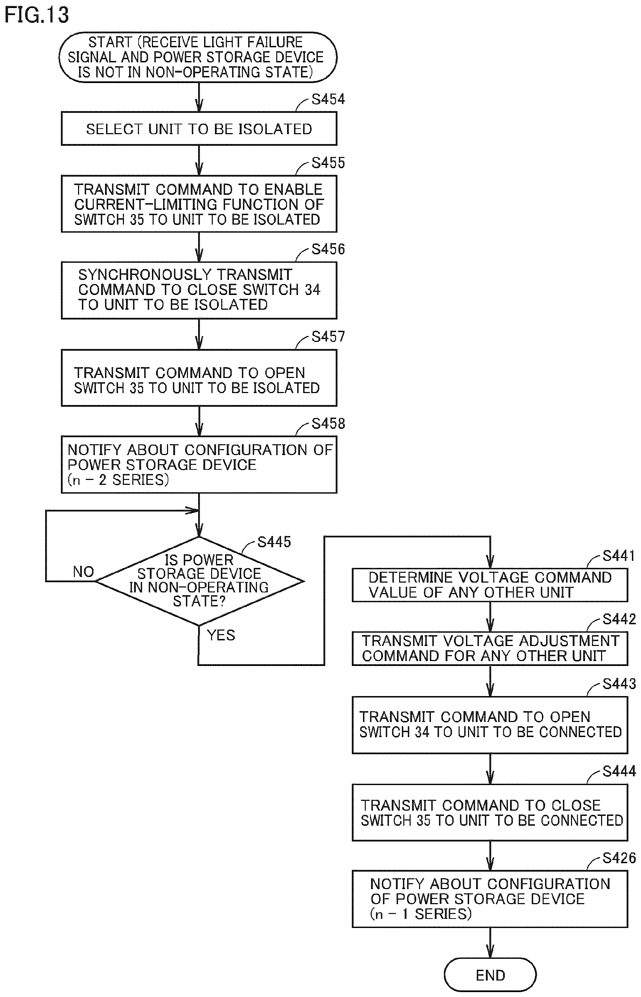

Fig. 13 is a flowchart showing a procedure of an operation continuation process performed by management device 36 of power storage device 10 when management device 36 of power storage device 10 has received the light failure signal from management device 37 of unit 32 and when power storage device 10 is not in the non-operating state in power storage device 10 according to the third embodiment. The flowchart in Fig. 13 shows a process procedure in the case of YES in step S453 and NO in step S427 in the flowchart shown in Fig. 11.

Since a procedure until management device 37 of unit 32 transmits the light failure signal is the same as those described with reference to Figs. 6 and 10, detailed description will not be repeated. In addition, when management device 36 of power storage device 10 has received the light failure signal from management device 37 of unit 32 and when power storage device 10 is in the non-operating state (YES in step S453 and YES in step S427), the same procedure as the procedure in steps S423 to S425, S441 to S444 and S426 in Fig. 12 is performed.

Referring to Fig. 13, when management device 36 of power storage device 10 has received the light failure signal from management device 37 of unit 32 and when power storage device 10 is not in the non-operating state (i.e., when the current is flowing between power storage device 10 and DC end 21 of power converter 20), management device 36 of power storage device 10 performs the same procedure as the procedure in steps S454 to S458 in Fig. 11. When step S457 is performed, the unit to be isolated and the unit to be connected are both switched to the bypass state. Therefore, the number of series units in each string 31 is n - 2. In next step S458, management device 36 of power storage device 10 notifies controller 23 of power conversion device 100 that the configuration of power storage device 10 has changed (i.e., the number of series units has changed to n - 2).

Next, management device 36 of power storage device 10 awaits until power storage device 10 enters the non-operating state (i.e., determination of YES is made in step S445). When power storage device 10 enters the non-operating state (YES in step S445), management device 36 of power storage device 10 performs the same procedure as the procedure in steps S441 to S444 and S426 in Fig. 12. As a result, the unit to be connected is switched from the bypass state to the chargeable and dischargeable state and the unit to be connected is connected in series to any other unit.

The flowcharts shown in Figs. 12 and 13 illustrate the example in which the unit to be isolated is also selected in each of strings 31 other than string 31 including the failed unit or the lightly failed unit, and the bypassed unit which is to be connected is replaced with the selected unit which is to be isolated. As a modification, the unit to be connected may be replaced with the unit to be isolated (i.e., the failed unit) in string 31 including the failed unit or the lightly failed unit, while the selection of the unit to be isolated and the unit replacement may not be performed in each of strings 31 that do not include the failed unit or the lightly failed unit.

### [Effect of Third Embodiment]

As described above, power storage device 10 according to the third embodiment includes n units 32 in each of strings 31_1 to 31_m, and one unit 32 in each string 31 is switched to the bypass state (switch 35: open state, switch 34: closed state), whereby power storage device 10 according to the third embodiment is used in a state where the number of series units in each string is n - 1. Therefore, in addition to the effects of power storage devices 10 according to the first and second embodiments, power storage device 10 according to the third embodiment has the effect of being able to use power storage device 10 without changing n - 1, which is the number of series units, before the unit heavy failure or the unit light failure occurs and after the non-operating period after the occurrence of the failure.

### Fourth Embodiment.

Power storage device 10 according to a fourth embodiment is obtained by modifying the usage of power storage device 10 according to the third embodiment. Therefore, since a configuration of power storage device 10 according to the fourth embodiment is the same as those of power storage device 10 according to the first embodiment described with reference to Figs. 2 and 3 and power storage device 10 according to the second embodiment described with reference to Fig. 8, detailed description will not be repeated.

Specifically, since power storage device 10 according to the third embodiment is used in a state where the number of series units is n - 1, a utilization rate of a unit that is in the bypass state from the beginning is low, which is not economical. Thus, in power storage device 10 according to the fourth embodiment, a unit to be bypassed is sequentially replaced.

Generally, a power storage element deteriorates gradually, which results in an increase in internal resistance or a decrease in capacity. A degree of deterioration and a content of a change in properties vary depending on a temperature and a working voltage of the power storage element, a manner of charging and discharging, and the like. Therefore, it is desirable to replace the unit to be bypassed in accordance with the degree of deterioration. Specifically, a time period for maintaining each unit in the bypass state (also referred to as "bypass time period") may be allocated to equalize the degree of deterioration of each unit, or a usage time period of a unit that tends to become higher in temperature may be shortened, or time allocation may be performed to equalize a cumulative amount of power and a cumulative current of charging and discharging. Furthermore, the bypass time period may be weighted by instantaneous power of each unit.

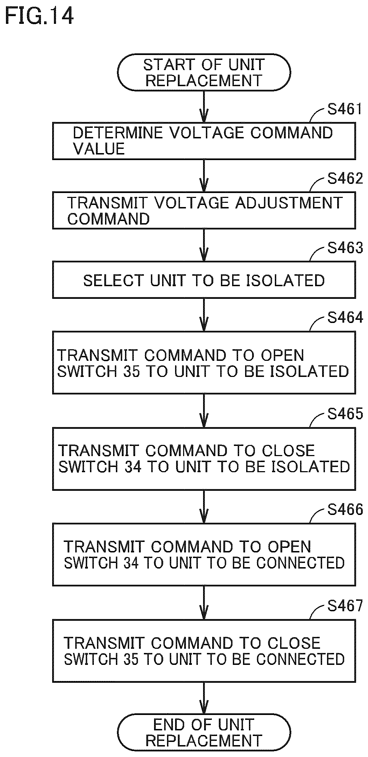

Replacement of unit 32 to be switched to the bypass state is performed when power storage device 10 is in the non-operating state. The timing of replacing unit 32 to be switched to the bypass state may be determined by management device 36 of power storage device 10, or a command may be provided from controller 23 of power conversion device 100 to management device 36 of power storage device 10. A procedure of replacing the unit to be bypassed will be described below with reference to Fig. 14.

Since a procedure of replacing a unit having a heavy failure or a light failure in power storage device 10 according to the fourth embodiment is the same as the procedure described with reference to Figs. 12 and 13 in the third embodiment, detailed description will not be repeated.

### [Procedure of Replacing Unit to Be Bypassed]

Fig. 14 is a flowchart showing the procedure of replacing the unit to be switched to the bypass state. The flow in Fig. 14 is performed when power storage device 10 is in the non-operating state.

First, in step S461 in Fig. 14, management device 36 of power storage device 10 determines a voltage command value of each of units 32 other than the unit to be connected that is in the bypass state at the present time. The voltage command value of unit 32 is set to be equal to the unit voltage of the unit to be connected. Furthermore, management device 36 of power storage device 10 multiplies the voltage command value of unit 32 by n - 1, which is the number of series units, thereby determining a voltage command value of string 31.

In next step S462, management device 36 of power storage device 10 transmits a voltage adjustment command to controller 23 of power conversion device 100 such that a voltage at DC end 21 of power converter 20 becomes equal to the voltage command value of string 31. In response to this voltage adjustment command, controller 23 operates power converter 20 (e.g., performs constant current and constant voltage control), thereby charging or discharging units 32 (also including the unit to be isolated) other than the unit to be connected to adjust the voltage. At this time, the active power is received and transmitted between AC end 22 of power converter 20 and power system 1, and thus, charging or discharging is performed with a smaller current such that power system 1 is not greatly affected. As a result of steps S461 and S462, the unit to be connected and each unit 32 (the unit to be isolated and any other unit) other than the unit to be connected have an equivalent OCV.

**In** next step S463, management device 36 of power storage device 10 selects a unit to be isolated, which is to be next switched to the bypass state (i.e., to be replaced with the unit to be connected) for each string 31.

**In** next step S464, management device 36 of power storage device 10 transmits a command to open switch 35 to the unit to be isolated in each string 31. Thus, the unit to be isolated in each string 31 is switched to the disconnected state.

**In** next step S465, management device 36 of power storage device 10 transmits a command to close switch 34 to the unit to be isolated in each string 31. Thus, the unit to be isolated in each string 31 is switched to the bypass state.

**In** next step S466, management device 36 of power storage device 10 transmits a command to open switch 34 to the unit to be connected in each string 31. Thus, the unit to be connected in each string 31 is switched to the disconnected state.

**In** next step S467, management device 36 of power storage device 10 transmits a command to close switch 35 to the unit to be connected in each string 31. Thus, the unit to be connected in each string 31 is switched to the chargeable and dischargeable state. As a result, replacement of the unit to be connected with the unit to be isolated is completed.

### [Effect of Fourth Embodiment]

As described above, power storage device 10 according to the fourth embodiment includes n units 32 for each string 31, and one of n units 32 is switched to the bypass state (switch 35 is brought to the open state and switch 34 is brought to the closed state), whereby power storage device 10 according to the fourth embodiment is used in a state where the number of series units in each string 31 is n - 1. **In** power storage device 10 according to the fourth embodiment, unit 32 to be bypassed is also replaced periodically other than at the time of the failure.

With the above-described configuration, in addition to the effect of power storage device 10 according to the third embodiment, power storage device 10 according to the fourth embodiment can suppress a variation in deterioration of power storage element SE among the units, and can suppress shortening of life by load balancing among the units. As a result, power storage device 10 according to the fourth embodiment has the effect of being able to lengthen a cycle of replacement of power storage element SE (unit replacement) and a cycle of maintenance of the device and to suppress the occurrence of a failure of the power storage element in the large-scale power storage device that tends to become higher in cost.

### Fifth Embodiment.

Similarly to the third and fourth embodiments, in power storage device 10 according to a fifth embodiment, one unit 32 is switched to the bypass state for each string 31, whereby power storage device 10 according to the fifth embodiment is used in a state where the number of series units is n - 1. As described in the first embodiment, power storage device 10 is connected to power system 1 with power converter 20 interposed therebetween, thereby constituting power conversion device 100. Particularly, a case in which emergency discharging from power conversion device 100 to power system 1 is performed due to tight supply and demand in power system 1 will be described in the fifth embodiment.

### [Configuration of Power Storage Device 10]

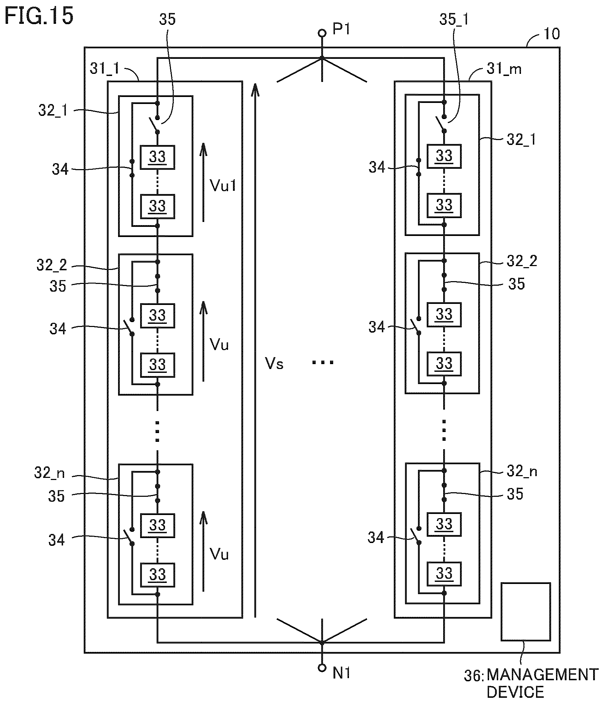

Fig. 15 is a diagram showing a configuration of power storage device 10 according to the fifth embodiment. A configuration of power storage device 10 in Fig. 15 is the same as those described in the first and second embodiments. That is, power storage device 10 includes m rows of strings 31_1 to 31_m connected in parallel between positive electrode **P1** and negative electrode N1, and management device 36. Each of strings 31 includes n units 32_1 to 32_n connected in series. Furthermore, each of units 32 includes switch 35 and a plurality of power storage modules 33 connected in series, and switch 34 connected in parallel to the whole of switch 35 and the plurality of power storage modules 33. Switch 35 may be implemented as switch portion 35A including switch 351, current-limiting switch 352 and current-limiting resistor 353 as described with reference to Fig. 8.

In the normal state, first unit 32_1 in each string 31 is in the bypass state (i.e., switch 35 is in the open state and switch 34 is in the closed state). Remaining units 32_2 to 32_n in each string 31 are in the chargeable and dischargeable state (i.e., switch 35 is in the closed state and switch 34 is in the open state).

Here, Vu1 represents a unit voltage of first unit 32_1 in each string 31, and Vu represents a unit voltage of each of second to n-th units 32_2 to 32_n in each string 31. Unit voltage Vu1 of first unit 32_1 that is in the bypass state is different from unit voltage Vu of each of the other units 32 that are currently being used. Actually, there is also a variation in properties of power storage elements SE for each unit, and thus, each of unit voltages Vu1 and Vu described above may indicate an average value.

In addition, a voltage between both ends of each string 31 is referred to as a string voltage Vs. Since m strings 31_1 to 31_m are connected in parallel, the string voltages thereof are equal to each other. In the case of Fig. 15, first unit 32_1 is in the bypass state, and thus, string voltage Vs is substantially equal to a sum of the unit voltages of second to n-th units 32_2 to 32_n, i.e., Vu × (n - 1).

### [Operation at the Time of Emergency Discharging]

Next, an operation of power storage device 10 in the case of the emergency discharging will be described. The emergency discharging refers to continued discharging performed by power conversion device 100 including power storage device 10 based on a command from a higher-order control system when power demand approaches an amount of power that can be supplied. In a below-described procedure of an emergency flow, the energy stored in unit 32 that is in the bypass state is also discharged.

Since the operation of power storage device 10 when the unit has the heavy failure and when the unit has the light failure is as described in the third embodiment, and the periodically performed operation of replacing the unit that is in the bypass state is as described in the fourth embodiment, description will not be repeated.

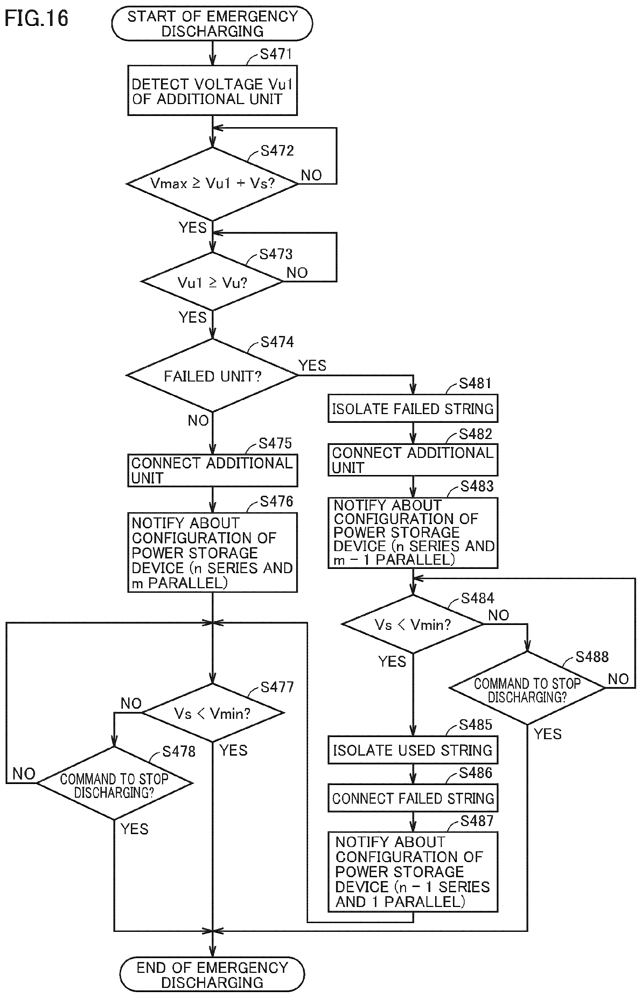

Fig. 16 is a flowchart showing a procedure of the emergency discharging in power storage device 10 in Fig. 15. In the following description, unit 32 connected **again between** both ends of string 31 in order to perform the emergency discharging, of units 32 that are in the bypass state, will be referred to as an additional unit. **In** Fig. 15, first unit 32_1 in each string 31 is the additional unit.

Referring to Fig. 16, when management device 36 of power storage device 10 has received a command to perform the emergency discharging, management device 36 of power storage device 10 detects unit voltage Vu1 of the additional unit in step S471.

**In** step S472, management device 36 of power storage device 10 determines whether a sum of string voltage Vs and unit voltage Vu1 of the additional unit is equal to or smaller than a maximum value Vmax of the string voltage. Here, maximum value Vmax of the string voltage is defined based on a maximum voltage at the DC end of power converter 20, or is defined based on a maximum voltage of power storage element SE of power storage device 10. Management device 36 of power storage device 10 awaits until the conditional expression: Vmax ≥ Vu1 + Vs in step S472 is satisfied. When this conditional expression is satisfied, management device 36 of power storage device 10 causes the process to proceed to next step S473.

**In** step S473, management device 36 of power storage device 10 determines whether unit voltage Vu1 of the additional unit is equal to or higher than unit voltage Vu of each of the other units 32 that are currently being discharged. Management device 36 of power storage device 10 awaits until the conditional expression: Vu1 ≥ Vu in step S473 is satisfied. When this conditional expression is satisfied, management device 36 of power storage device 10 causes the process to proceed to step S474.

**In** step S474, management device 36 of power storage device 10 determines the presence or absence of a failed unit. When there is no failed unit (NO in step S474), management device 36 of power storage device 10 connects additional unit 32_1 that is in the bypass state to the other units 32_2 to 32_n in series for each string 31 in next step S475. That is, in additional unit 32_1 in each string 31, management device 37 brings switch 34 to the open state and switch 35 to the closed state in accordance with the command from management device 36 of power storage device 10, thereby switching the additional unit to the chargeable and dischargeable state.

**In** next step S476, management device 36 of power storage device 10 notifies controller 23 of power conversion device 100 about the configuration of power storage device 10. At this point in time, the configuration of power storage device 10 is such that the number of series units is n and the number of parallel strings is m, and the energy stored in the bypassed additional unit is also discharged.

**In** next step S477, management device 36 of power storage device 10 determines whether string voltage Vs at the present time is smaller than a minimum value Vmin of the string voltage. Here, minimum value Vmin of the string voltage is defined based on a minimum voltage at the DC end of power converter 20, or is defined based on a minimum voltage of power storage element SE of power storage device 10. When string voltage Vs at the present time is smaller than minimum value Vmin of the string voltage (YES in step S477), management device 36 of power storage device 10 ends the emergency discharging.

Furthermore, when management device 36 of power storage device 10 has received a command to stop the emergency discharging from controller 23 of power conversion device 100 or a higher-order controller thereof (YES in step S478), management device 36 of power storage device 10 also ends the emergency discharging. When string voltage Vs at the present time is not smaller than minimum value Vmin of the string voltage (NO in step S477) and when management device 36 of power storage device 10 has not received the command to stop the emergency discharging (NO in step S478), management device 36 of power storage device 10 continues the emergency discharging.

Returning to step S474 of determining the presence or absence of a failed unit, a case in which there is a failed unit (YES in step S474) will be described. **In** this case, in next step S481, management device 36 of power storage device 10 instructs management device 37 of the failed unit to switch the failed unit to the disconnected state (i.e., to bring switch 35 to the open state), thereby isolating string 31 including the failed unit (referred to as "failed string") from power storage device 10.

**In** next step S482, management device 36 of power storage device 10 connects additional unit 32_1 that is in the bypass state to the other units 32 in series, thereby switching additional unit 32_1 to the chargeable and dischargeable state. That is, management device 37 of the additional unit brings switch 34 to the open state and switch 35 to the closed state in accordance with the command from management device 36 of power storage device 10.

In next step S483, management device 36 of power storage device 10 notifies controller 23 of power conversion device 100 about the configuration of power storage device 10. At this point in time, the configuration of power storage device 10 is such that the number of series units is n and the number of parallel strings is m - 1, and the energy stored in the bypassed additional unit is discharged although the energy stored in the isolated failed string is not discharged.

In next step S484, management device 36 of power storage device 10 determines whether string voltage Vs at the present time is smaller than minimum value Vmin of the string voltage, except for the isolated failed string. When string voltage Vs at the present time is not smaller than minimum value Vmin of the string voltage (NO in step S484) and when management device 36 of power storage device 10 has not received the command to stop the emergency discharging (NO in step S478), management device 36 of power storage device 10 continues the emergency discharging with the present configuration of power storage device 10. When management device 36 of power storage device 10 has received the command to stop the emergency discharging, before the condition: Vs < Vmin in step S484 is satisfied (YES in step S488), management device 36 of power storage device 10 ends the emergency discharging.

On the other hand, when string voltage Vs at the present time is smaller than minimum value Vmin of the string voltage, except for the isolated failed string (YES in step S484), management device 36 of power storage device 10 isolates currently-used strings 31 other than the failed string from power storage device 10 in next step S485. That is, in each of strings 31 other than the failed string, management device 37 of any one of units 32 brings switch 35 to the open state in accordance with the command from management device 36 of power storage device 10, thereby switching this unit to the disconnected state.

**In** next step S486, the isolated failed string is connected such that charging and discharging can be performed. That is, management device 37 of the failed unit brings switch 34 to the closed state in accordance with the command from management device 36 of power storage device 10, thereby switching the failed unit from the disconnected state to the bypass state. As a result, the stored energy is released from units 32 other than the failed unit in the failed string.

**In** next step S487, management device 36 of power storage device 10 notifies controller 23 of power conversion device 100 about the configuration of power storage device 10. At this point in time, the configuration of power storage device 10 is such that the number of series units is n - 1 and the number of parallel strings is 1 (i.e., only the failed string is currently being discharged) when the number of the failed unit is one.

Thereafter, the process proceeds to steps S477 and S488 that are the same as those when there is no failed unit. That is, when string voltage Vs of the currently-discharged failed string is smaller than minimum value Vmin of the string voltage (YES in step S477) or when management device 36 of power storage device 10 has received the command to stop the emergency discharging (YES in step S478), management device 36 of power storage device 10 ends the emergency discharging.

According to the above-described procedure of the emergency discharging, even when there is a failed unit, discharging is first performed except for the failed string. As a result, the energy stored in the bypassed unit can also be discharged, although the number of parallel strings decreases. Thereafter, discharging from the failed string can also be performed except for the failed unit. As a result, the energy stored in power storage device 10 can be effectively used.

**In** view of balance of the number of series units and the number of parallel strings, when there is a failed unit, only the failed unit is replaced with the additional unit and the bypassed additional unit is not connected in each of the other strings 31, whereby the emergency discharging may be continued with the configuration of the number of series units being n - 1 and the number of parallel strings being m.

### [Effect of Fifth Embodiment]

As described above, in power storage device 10 according to the fifth embodiment, one unit 32 is switched to the bypass state for each string 31 in the normal state, whereby power storage device 10 is used with the configuration of the number of series units being n - 1. At the time of the emergency discharging, unit 32 that is in the bypass state is added, whereby power storage device 10 can be used with the configuration of the number of series units being n. Therefore, in addition to the effects of power storage devices 10 according to the third and fourth embodiments, power storage device 10 according to the fifth embodiment can achieve an increase in dischargeable power at the time of the emergency discharging. As a result, the energy stored in power storage device 10 can be effectively used and the total number of power storage elements SE mounted on power storage device 10 can be reduced.

### Sixth Embodiment.

Power storage device 10 according to a sixth embodiment has a ground terminal E in addition to positive electrode P1 and negative electrode N1. Ground terminal E is directly grounded, or is grounded with a low resistance or a low impedance interposed therebetween. Differences from the configuration in Fig. 2 according to the first embodiment will be described below. The sixth embodiment can be combined with the first to fifth embodiments.

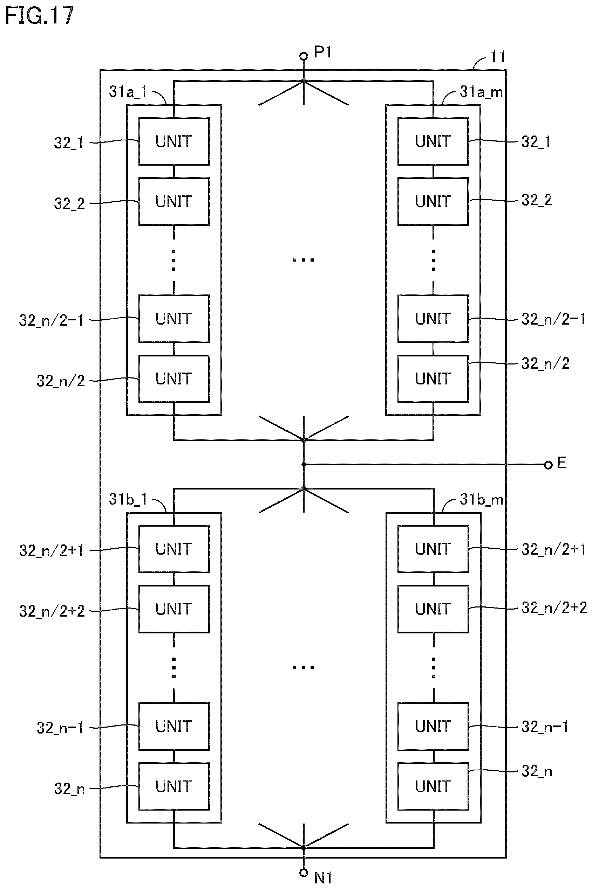

Fig. 17 is a diagram showing a configuration of a power storage device 11 according to the sixth embodiment. As shown in Fig. 17, power storage device 11 includes m strings 31a_1 to 31a_m connected in parallel to each other between positive electrode P1 and ground terminal E, and m strings 31b_1 to 31b_m connected in parallel to each other between ground terminal E and negative electrode N1. Each of strings 31a and 31b includes n/2 (n is an even number) units 32 connected in series to each other. Since the configuration of each of units 32 is as described with reference to Figs. 3 and 8, description will not be repeated. In the following description, m strings 31a_1 to 31a_m will be collectively referred to as "upper-side string 31a" and m strings 31b_1 to 31b_m will be collectively referred to as "lower-side string 31b".

Ground terminal E is directly grounded, or is grounded with a low resistance or a low impedance interposed therebetween. Ground terminal E may be further connected to an intermediate potential terminal of power converter 20.

It is assumed that unit 32_1 included in string 31a_1 fails and thus failed unit 32_1 is switched to the disconnected state and string 31a_1 is temporarily isolated. In this case, m - 1 strings are connected in parallel in upper-side string 31a and m strings are connected in parallel in lower-side string 31b. When the operation is continued in this state, a difference between an SOC of upper-side string 31a and an SOC of lower-side string 31b increases because each string in upper-side string 31a is different in current from each string in lower-side string 31b. Therefore, when string 31a_1 is isolated, any one string in lower-side string 31b needs to be isolated.

When failed unit 32_1 in string 31a_1 is switched to the bypass state, one unit 32 in each of strings 31a_2 to 31a_m needs to be switched to the bypass state. In this case, unit 32 in each of strings 31b_1 to 31b_m does not need to be switched to the bypass state.

When one unit 32 is maintained in the bypass state for each of strings 31 during a normal operation, the string including unit 32 in the bypass state may be only upper-side string 31a, or may be only lower-side string 31b, or may be both upper-side string 31a and lower-side string 31b.

### [Effect of Sixth Embodiment]

As described above, power storage device 11 according to the sixth embodiment has ground terminal E in addition to positive electrode P1 and negative electrode N1, and ground terminal E can be directly grounded, or can be grounded with the impedance interposed therebetween. Thus, in addition to the effects of the first to fifth embodiments, a potential to ground of power storage device 11 can be reduced. As a result, a rated insulation voltage can be reduced, and thus, the size and cost of the power storage device can be reduced.

### Seventh Embodiment.

A seventh embodiment provides a modification of unit 32 in Fig. 3. The seventh embodiment can be combined with the first to sixth embodiments.

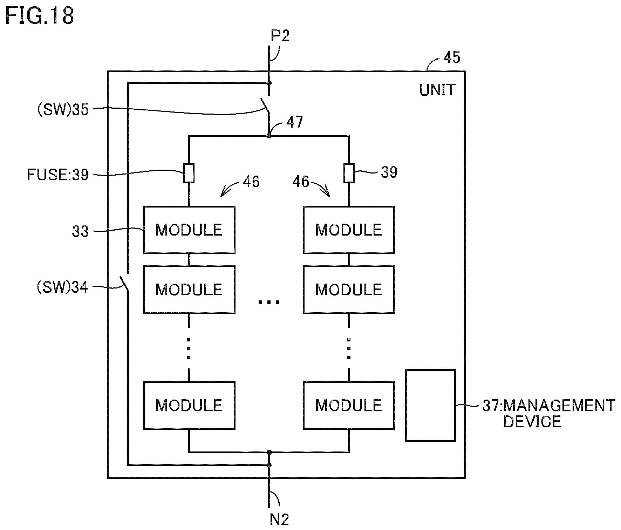

Fig. 18 is a diagram showing a configuration of a unit 45 in a power storage device according to the seventh embodiment. Unit 45 in Fig. 18 includes a plurality of module groups 46 connected in parallel to each other, and each of module groups 46 includes a plurality of power storage modules 33 connected in series. Each of module groups 46 is connected between one end 47 of switch 35 and negative-side node N2. In this respect, unit 45 in Fig. 18 is different from unit 32 in Fig. 3 including only one module group 46 (i.e., the plurality of power storage modules 33 connected in series).

Unit 45 in Fig. 18 is different from unit 32 in Fig. 3 in that unit 45 further includes a fuse 39 connected in series to each of module groups 46. Instead of fuse 39, a switch such as a circuit breaker that can cut off an overcurrent may be provided. Since the remaining configuration of unit 45 in Fig. 18 is the same as that of unit 32 in Fig. 3, the same or corresponding portions are denoted by the same reference characters and description will not be repeated.

By connecting the plurality of power storage modules 33 constituting unit 45 in series and in parallel as described above, the number of parallel strings 31 can be reduced.

It should be understood that the embodiments disclosed herein are illustrative and non-restrictive in every respect. For example, the power storage device and the power conversion device including the power storage device described in each of the first to seventh embodiments can be combined with another known technique or can be modified, for example, partially omitted, without departing from the gist of the present disclosure. The scope of the present application is defined by the terms of the claims, rather than the description above, and is intended to include any modifications within the scope and meaning equivalent to the terms of the claims.

### REFERENCE SIGNS LIST

1 power system; 10, 11 power storage device; 20 power converter; 21 DC end; 22 AC end; 23 controller; 31 string; 31a upper-side string; 31b lower-side string; 32, 45 unit; 33 power storage module; 34, 35 switch; 35A switch portion; 36, 37, 38 management device; 39 fuse; 46 module group; 100 power conversion device; 351 switch; 352 current-limiting switch; 353 current-limiting resistor; 354, 356 IGBT; 355, 357 diode; E ground terminal; N1 negative electrode; N2 negative-side node; P1 positive electrode; P2 positive-side node; SE power storage element; SW switching circuit.

## Claims

1. A power storage device comprising:
m strings connected in parallel to each other between a positive electrode and a negative electrode, the m being an integer equal to or larger than 2, wherein
each of the m strings includes n units connected in series to each other between the positive electrode and the negative electrode, the n being an integer equal to or larger than 2,
each of the n units includes:
a positive-side node and a negative-side node for connecting to an adjacent unit;
a plurality of power storage elements; and
a switching circuit capable of switching a state of each unit to a first state and a second state, the first state being a state in which the plurality of power storage elements are connected between the positive-side node and the negative-side node, the second state being a state in which the positive-side node and the negative-side node are connected without having the plurality of power storage elements interposed therebetween,
the power storage device further comprises one or more control units that control the switching circuit, and
when the one or more control units determine that a first unit, which is one of the n units, in a first string, which is one of the m strings, has a failure, the one or more control units control the switching circuit to switch a state of the first unit in the first string from the first state to the second state and switch a state of a second unit, which is one of the n units, in each string other than the first string from the first state to the second state, whereby the same number of units are switched to the second state in the first string and in each string other than the first string.

2. The power storage device according to claim 1, wherein
the power storage device is configured to be connected to a power system with a power converter interposed therebetween, thereby discharging energy to the power system or charging energy from the power system,
the switching circuit is further capable of switching the state of each unit to a third state, the third state being a state in which the positive-side node and the negative-side node are disconnected,
when the one or more control units determine that the first unit, which is one of the n units, in the first string, which is one of the m strings, has a failure, the one or more control units control the switching circuit to switch the state of the first unit in the first string to the third state, and
when the power storage device is in a non-operating state after the state of the first unit in the first string determined as having the failure is switched to the third state, the one or more control units control the switching circuit to switch the state of the first unit in the first string from the third state to the second state and switch the state of the second unit, which is one of the n units, in each string other than the first string from the first state to the second state, the non-operating state being a state in which a current does not flow between the power converter and the power storage device for a certain time period or longer.

3. The power storage device according to claim 2, wherein
before the state of the first unit and the state of the second unit in each string other than the first string are switched to the second state when the power storage device is in the non-operating state, the one or more control units instruct a controller of the power converter to perform an additional operation such that a voltage between the positive-side node and the negative-side node in each of the units other than the first unit in the first string becomes equal to a voltage between the positive-side node and the negative-side node in each of the units in each string other than the first string.

4. The power storage device according to claim 1, wherein
the power storage device is configured to be connected to a power system with a power converter interposed therebetween, thereby discharging energy to the power system or charging energy from the power system,
the switching circuit is further capable of switching the state of each unit to a third state and a fourth state, the third state being a state in which the positive-side node and the negative-side node are disconnected, the fourth state being a state in which the plurality of power storage elements and a current-limiting resistor are connected in series between the positive-side node and the negative-side node,
the failure of the unit includes a heavy failure and a light failure,
when the one or more control units determine that the first unit, which is one of the n units, in the first string, which is one of the m strings, has the heavy failure, the one or more control units control the switching circuit to switch the state of the first unit in the first string to the third state,
when the power storage device is in a non-operating state after the state of the first unit in the first string determined as having the heavy failure is switched to the third state, the one or more control units control the switching circuit to switch the state of the first unit in the first string from the third state to the second state and switch the state of the second unit, which is one of the n units, in each string other than the first string from the first state to the second state, the non-operating state being a state in which a current does not flow between the power converter and the power storage device for a certain time period or longer,
when the one or more control units determine that the first unit, which is one of the n units, in the first string, which is one of the m strings, has the light failure and when the power storage device is not in the non-operating state, the one or more control units control the switching circuit to switch the state of the first unit in the first string and the state of the second unit, which is one of the n units, in each string other than the first string to the fourth state, and then, switch the state of the first unit and the state of the second unit in each string other than the first string from the fourth state to the second state, and
when the one or more control units determine that the first unit, which is one of the n units, in the first string, which is one of the m strings, has the light failure and when the power storage device is in the non-operating state, the one or more control units control the switching circuit to switch the state of the first unit in the first string and the state of the second unit, which is one of the n units, in each string other than the first string to the second state without switching to the fourth state.

5. The power storage device according to any one of claims 2 to 4, wherein
for each of the strings, the one or more control units determine a reserve unit maintained in the second state, and
the one or more control units control the switching circuit to switch the state of the first unit and the state of the second unit in each string other than the first string to the second state due to the failure, and then, switch a state of the reserve unit from the second state to the first state.

6. The power storage device according to claim 5, wherein
in a case where there is no failed unit in each string when the one or more control units receive an emergency discharge command due to tight supply and demand in the power system, the one or more control units control the switching circuit to switch the state of the reserve unit in each string from the second state to the first state.

7. The power storage device according to claim 6, wherein
when the one or more control units receive the emergency discharge command due to tight supply and demand in the power system after the state of the first unit in the first string is switched to the third state due to the failure of the first unit in the first string, the one or more control units control the switching circuit to switch the state of the reserve unit in each string other than the first string from the second state to the first state, and
the one or more control units control the switching circuit to switch a state of any one unit in each string other than the first string to the third state after completion of discharging of each string other than the first string, and then, control the switching circuit to switch the state of the first unit in the first string to the second state and switch the state of the reserve unit in the first string to the first state.

8. The power storage device according to any one of claims 1 to 7, wherein
for each string other than the first string, the one or more control units select the second unit based on a use history of each of the n units.

9. A power conversion device comprising:
the power storage device as recited in any one of claims 1 to 8; and
a power converter configured to be connected between the power storage device and a power system to discharge energy stored in the power storage device to the power system or charge energy from the power system to the power storage device.
